# EUROPEAN PATENT SPECIFICATION

(11) **EP 1 903 627 B1**
(45) Date of publication and mention of the grant of the patent: **31.08.2011**
(21) Application number: 07115698.8
(22) Date of filing: 05.09.2007
(51) Int. Cl.: H01M 4/02, H01M 4/48, H01M 4/50, H01M 4/52, H01M 4/58, H01M 10/052

(54) **Cathode active material for a lithium battery**
Aktives Kathodenmaterial für eine Lithiumbatterie
Matériau actif de cathode pour une batterie au lithium

(30) Priority: 20.09.2006 KR 20060091141
(43) Date of publication of application: 26.03.2008
(73) Proprietor: Samsung SDI Co., Ltd., Suwon-si, Gyeonggi-do 442-390 (KR)
(72) Inventor: Park, Kyu-sung c/o Samsung Advance Institute of Technology, Gyeonggi-do (KR); Yoon, Jae-gu c/o Samsung Advanced Institute of Technology, Gyeonggi-do (KR); Im, Dong-min c/o Samsung Advanced Institute of Technology, Gyeonggi-do (KR)
(74) Representative: Zijlstra, Robert Wiebo Johan

(56) References cited:
- US-A1- 2006 051 671
- WU Y ET AL: "High Capacity, Surface-Modified Layered Li[Li(1-x)/3Mn(2-x)/3Nix/3Cox /3]O2 Cathodes with Low Irreversible Capacity Loss" ELECTROCHEMICAL AND SOLID-STATE LETTERS, THE SOCIETY, PENNINGTON, NJ, US, vol. 9, no. 5, 2 March 2006 (2006-03-02), pages A221-A224, XP002460582 ISSN: 1099-0062
- MICHAEL M THACKERAY ET AL: "Advances in manganese-oxide 'composite' electrodes for lithium-ion" JOURNAL OF MATERIALS CHEMISTRY, THE ROYAL SOCIETY OF CHEMISTRY, CAMBRIDGE, GB, vol. 15, 10 March 2005 (2005-03-10), pages 2257-2267, XP007903619 ISSN: 0959-9428
- THACKERAY ET AL: "Comments on the structural complexity of lithium-rich Li1+xM1-xO2 electrodes (M=Mn, Ni, Co) for lithium batteries" ELECTROCHEMISTRY COMMUNICATION, ELSEVIER, AMSTERDAM, NL, vol. 8, no. 9, 9 August 2006 (2006-08-09), pages 1531-1538, XP005638334 ISSN: 1388-2481

## Description

The present invention relates to cathode active materials and to lithium batteries employing the same.

Lithium transition metal oxides such as LiNiO₂, LiCoO₂, LiMn₂O₄, LiFePO₄, LiNiₓCo₁₋ₓO₂ (0≤x≤1), and LiNi_{1-x-y}CoₓMn_{y}O₂ (0≤x≤0.5, 0≤y≤0.5) have been used as cathode active materials for lithium batteries. As high capacity cathode active materials are required, complex oxide systems have been proposed as potential substitutes for conventional cathode active materials.

Among these complex oxide systems, overlithiated Li₁₊ₓMe₁₋ₓO₂ (where Me is a transition metal and 0<x<0.33), which can also be expressed in composite oxide form as yLi₂MO₃-(1-y)LiMeO₂ (0<y<1), basically has the electrochemical characteristics of both Li₂MO₃ and LiMeO₂(where Me is a transition metal). For convenience, the composite oxide notation will be used hereafter. For example, when Li₂MnO₃ is used as the Li₂MO₃ component of the xLi₂MO₃-(1-x)LiMeO₂ complex oxide system (as described in the following reaction scheme), manganese (Mn) is not further oxidized during charging due to its 4+ oxidation number. Thus, oxygen (O), together with lithium (Li), is released from Li₂MnO₃. During discharging, the released oxygen cannot be reversibly intercalated into the cathode material, and thus, only lithium is intercalated into the cathode material. At this time, manganese is reduced from 4+ to 3+. Therefore, when regarded as a two-phase composite, the theoretical initial efficiency is merely 50% by de-intercalation of two lithium ions during initial charging and intercalation of one lithium ion during discharging.

(Charge) Li₂Mn⁴⁺0₃ - Li₂O → Mn⁴⁺O₂

(Discharge) Mn⁴⁺O₂ + Li → LiMn³⁺O₂

Furthermore, in the overlithiated transition metal oxide system, in order to achieve high capacity, x in Li₁₊ₓMe₁₋ₓO₂ is increased to 0.2 or more, thereby causing a reduction in irreversible capacity.

US patent application No. US, 2006/0051671 A1 discloses an activated electrode for a non-aqueous electrochemical cell with a precursor of a lithium metal oxide with the formula xLi₂MnO₃.(1-x)LiMn_{2-y}M_{y}O₄ for 0<x< and 0<y<1 in which the Li₂MnO₃ and LiMn_{2-y}M_{y}O₄ components have layered and spinel-type structures, respectively, and in which M is one or more metal cations. The electrode is activated by removing lithia, or lithium and lithia, from the precursor.

Wu et al. in "High Capacity, Surface-Modified Layered Li[Li_{(1-x)/3}Mn_{(2-x)/3}Ni_{x/3}CO_{x/3}]O₂ Cathodes with Low Irreversible Capacity Loss", Electrochemical and Solid-State Letters, 9 (5) A221-A224 (2006) disclose layered cathodes belonging to the Li[Li_{(1-x)/3}Mn_{(2-x)/3}Ni_{x/3}Co_{x/3}]O₂ solid solution series.

According to the present invention, a cathode active material is capable of minimizing reductions in irreversible capacity during initial charging.

In an embodiment of the present invention, a lithium battery employs the cathode active material.

According the present invention, a cathode active material includes a lithium-free transition metal oxide and a lithium metal oxide represented by Formula 1 (composite notation).

Formula 1 xLi₂MO₃-(1-x)LiMeO₂,

wherein 0<x≤0.8, M is a metal selected from Mn, Ti, Zr and combinations thereof, and Me is a metal selected from Ti, V, Cr, Mn, Fe, Co, Ni, Cu, Al, Mg, Zr, B and combinations thereof.

According to an embodiment of the present invention, the transition metal oxide may be selected from vanadium-containing oxides, manganese-containing oxides, iron-containing oxides, titanium-containing oxides, cobalt-containing oxides, nickel-containing oxides, molybdenum-containing oxides, tungsten-containing oxides and combinations thereof.

According to another embodiment of the present invention, the transition metal oxide may be a vanadium-containing oxide or a manganese-containing oxide.

According to another embodiment of the present invention, the transition metal oxide may be VOₓ or V₂O₅.

According to another embodiment of the present invention, the transition metal oxide may be present in an amount of about 50 wt% or less based on the total weight of the cathode active material. For example, the transition metal oxide may be present in an amount ranging from about 3 to about 20 wt% based on the total weight of the cathode active material.

According to another embodiment of the present invention, in Formula 1 above, x may range from about 0.1 to about 0.6.

According to another embodiment of the present invention, a lithium battery employs the cathode active material.

The above and other features and advantages of the present invention will become more apparent by reference to the following detailed description when considered in conjunction with the attached drawings in which:
FIG. 1 is a graph comparing the charge/discharge characteristics of the lithium batteries manufactured according to Comparative Example 1 and Example 2;
FIG. 2 is a graph comparing the cycle characteristics of the lithium batteries manufactured according to Comparative Example 1 and Examples 1 and 2;
FIG. 3 is a graph comparing the ratio of discharge capacity at the X^{th} cycle (X is the number of cycles) to the initial charge capacity of the lithium batteries manufactured according to Comparative Example 1 and Examples 1 and 2; and
FIG. 4 is a cross sectional view of a lithium battery according to one embodiment of the present invention.

A cathode according to one embodiment of the present invention includes a cathode active material that enhances the electrochemical characteristics of the cathode. The cathode active material includes an electrochemically active transition metal oxide and a complex compound. Therefore, lithium which is not intercalated into the cathode during initial discharging can be utilized, thereby significantly decreasing reductions in irreversible capacity relative to initial charge capacity. This makes an advantageous cathode, particularly when the cathode is used in the manufacture of a battery having an anode. In addition, the risk of oxygen generation can be reduced, thereby more efficiently assuring safety.

The cathode active material according to one embodiment of the present invention is obtained by adding a transition metal oxide to a complex compound represented by Formula 1.

Formula 1 xLi₂MO₃-(1-x)LiMeO₂

In Formula 1, 0<x≤0.8, and M and Me are each independently a metal ion.

The transition metal oxides added to the complex compound of Formula 1 basically do not participate in the first charging reaction. However, the transition metal oxide is reduced during discharging, and thus, further receives lithium which has been de-intercalated from the complex compound during charging. This improves lithium utilization, resulting in minimization of reductions in irreversible capacity. In contrast, conventional cathode active materials include lithium which cannot be intercalated into the cathode during initial discharging.

In one embodiment of the present invention, xLi₂Mn⁴⁺O₃-(1-x)LiMeO₂ is used as the complex compound and V₂O₅ is used as the transition metal oxide. In this embodiment, the cathode active material undergoes the following Reaction Scheme 1.

### Reaction Scheme 1

Charge:

xLi₂Mn⁴⁺O₃-(1-x)LiMeO₂ - (1-x)Li - xLi₂O + yV₂O₅ → xMn⁴⁺O₂-(1-x)MeO₂ + yV₂O₅

Discharge:

xMn⁴⁺O₂-(1-x)MeO₂ + yV₂O₅ + (1 +z)Li → xLiMn³⁺O₂-(1-x)LiMeO₂ + zLi·yV₂O₅

In Reaction Scheme 1, 0<y<1 and 0<z<1.

Referring to Reaction Scheme 1, during initial charging, manganese (Mn) cannot be further oxidized due to its 4+ oxidation number, and lithium (Li) together with oxygen (O), is de-intercalated from the complex compound. The V₂O₅ used as an additive does not participate in the initial charging reaction, but is reduced from +5 to +3 during discharging. At this time, manganese is also reduced from +4 to +3. Through these reduction processes, lithium (which has been de-intercalated during charging) is combined with the V₂O₅ and the manganese. That is, the use of V₂O₅ further increases the amount of lithium intercalated into the cathode. Therefore, the theoretical initial efficiency of Li₂MnO₃ (the complex compound of Formula 1) can be enhanced by the addition of the transition metal oxide (relative to the theoretical initial efficiency of less than 50%) by de-intercalation of two lithium ions during initial charging and intercalation of one lithium ion during discharging.

In the cathode active material according to one embodiment of the present invention, the transition metal oxide may be a lithium-free transition metal oxide. Nonlimiting examples of suitable transition metal oxides include vanadium-containing oxides, manganese-containing oxides, iron-containing oxides, titanium-containing oxides, cobalt-containing oxides, nickel-containing oxides, molybdenum-containing oxides, tungsten-containing oxides and combinations thereof. In one embodiment, for example, the transition metal oxides is selected from vanadium-containing oxides and manganese-containing oxides because these oxides have theoretically high reaction voltages. In one embodiment, the vanadium-containing oxide may be VOₓ, where 2≤x<2.5, or V₂O₅.

The transition metal oxide may be present in the cathode active material in an amount of about 50 wt% or less based on the total weight of the cathode active material. In one embodiment, for example, the transition metal oxides is present in the cathode active material in an amount ranging from about 3 to about 20 wt% based on the total weight of the cathode active material. If the content of the transition metal oxide exceeds about 50 wt%, capacity etc. may be reduced due to decreased amounts of active material.

The complex compound of Formula 1 may be prepared by combustion synthesis. For example, metal salt starting materials (e.g., carbonates, acetates) are dissolved in an acid solution to obtain a sol, which sol is then dried to evaporate moisture. The resultant gel is ignited and further thermally treated to obtain the complex compound of Formula 1 in the form of powder.

Alternatively, the complex compound of Formula 1 may be prepared by a hydrothermal process under basic conditions using LiOH and/or KOH. The hydrothermal process may be carried out under pressurized conditions, e.g., in a pressurized autoclave set to an atmospheric pressure ranging from about 5 to about 35 and a temperature ranging from about 100 to about 150°C for from about 6 to about 12 hours.

Any suitable preparation process may be used to prepare the complex compound of Formula 1.

Formula 1 xLi₂MO₃-(1-x)LiMeO₂

In Formula 1, 0<x≤0.8, M is a metal selected from Mn, Ti, Zr and combinations thereof, and Me is a metal selected from Ti, V, Cr, Mn, Fe, Co, Ni, Cu, Al, Mg, Zr, B and combinations thereof.

In one embodiment, in the complex compound of Formula 1, Me may be a metal selected from Ni, Co, Mn, and Cr.

In one embodiment, in the complex compound of Formula 1, x is a factor determining the molar ratio of Li₂MO₃ and LiMeO₂, and 0<x≤0.8. In one embodiment, for example, x may range from about 0.1 to about 0.6. If x exceeds about 0.8, electrical conductivity may be reduced.

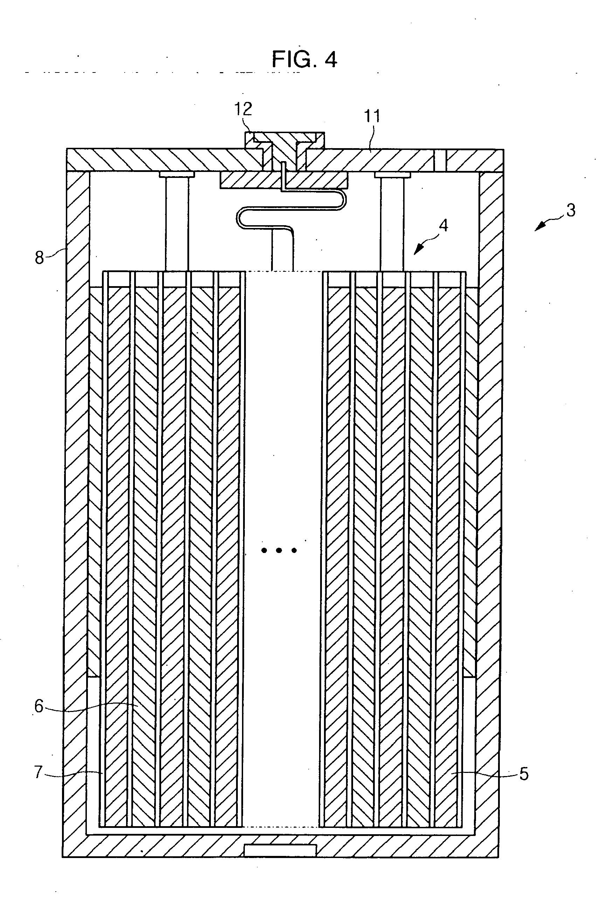

According to another embodiment of the present invention, a lithium battery employs a cathode of the present invention. As shown in FIG. 4, the lithium battery 3 includes an electrode assembly 4 including a cathode 5, anode 6 and a separator 7 positioned between the cathode 5 and anode 6. The electrode assembly 4 is housed in a battery case 8, and sealed with a cap plate 11 and sealing gasket 12. An electrolyte is then injected into the battery case to complete the battery. In one embodiment of the present invention, a lithium battery can be manufactured as follows.

First, a cathode active material, a conducting agent, a binder, and a solvent are mixed to prepare a cathode active material composition. The cathode active material composition is coated directly on an aluminum current collector and dried to prepare a cathode plate. Alternatively, the cathode active material composition is cast on a separate support to form a film, which film is then separated from the support and laminated on an aluminum current collector to prepare a cathode plate.

One nonlimiting example of a suitable conducting agent is carbon black. Nonlimiting examples of suitable binders include vinylidene fluoride/hexafluoropropylene copolymers, polyvinylidenefluoride, polyacrylonitrile, polymethylmethacrylate, polytetrafluoroethylene, and mixtures thereof. The binder may also be a styrene butadiene rubber-based polymer. Nonlimiting examples of suitable solvents include N-methylpyrrolidone, acetone, water, and the like. The cathode active material, the conducting agent, the binder, and the solvent are each used in an amount commonly used in lithium batteries.

An anode plate is prepared in a manner similar to that used to prepare the cathode plate. Specifically, an anode active material, a conducting agent, a binder, and a solvent are mixed to prepare an anode active material composition. The anode active material composition is coated directly on a copper current collector to prepare an anode plate. Alternatively, the anode active material composition is cast on a separate support to form a film, which film is then separated from the support and laminated on a copper current collector to obtain an anode plate. The anode active material, the conducting agent, the binder, and the solvent are each used in an amount commonly used in lithium batteries.

Nonlimiting examples of suitable anode active materials include lithium metal, lithium alloys, carbonaceous materials, and graphite. The conducting agent, the binder, and the solvent in the anode active material composition may be the same as those in the cathode active material composition. In some cases, the cathode active material composition and the anode active material composition may further include a plasticizer to form pores inside the electrode plates.

The cathode plate and the anode plate may be separated by a separator. The separator is not limited and may be any separator commonly used in lithium batteries. In particular, a separator having low resistance against ion mobility of the electrolyte and good impregnation with the electrolyte solution may be used. For example, the separator may be made of a material selected from glass fiber, polyester, Teflon, polyethylene, polypropylene, polytetrafluoroethylene (PTFE), and combinations thereof. The separator may also be made of woven or non-woven materials. In more detail, a coilable separator made of a material such as polyethylene or polypropylene may be used in lithium ion batteries, and a separator having good impregnation with the organic electrolyte solution may be used in lithium ion polymer batteries. These separators can be manufactured as follows.

A polymer resin, a filler, and a solvent are mixed to prepare a separator composition. The separator composition is coated directly on an electrode and dried to form a separator film. Alternatively, the separator composition is cast on a separate support and dried to form a film, which film is separated from the support and laminated on an electrode.

The polymer resin is not particularly limited, and may be selected from any binder materials used in electrode plates. Nonlimiting examples of suitable polymer resins include vinylidenefluoride/hexafluoropropylene copolymers, polyvinylidenefluoride, polyacrylonitrile, polymethylmethacrylate, and mixtures thereof. In one embodiment, for example, a vinylidenefluoride/hexafluoropropylene copolymer containing from about 8 to about 25 wt% hexafluoropropylene is used.

The separator is disposed between the cathode plate and anode plate to form a battery structure. The battery structure is wound or folded and encased in a cylindrical or square battery case, and an organic electrolyte solution is then injected into the case to complete a lithium ion battery.

Alternatively, the battery structure is stacked in the form of a bicell structure and impregnated with an organic electrolyte solution. The resultant structure is received in a pouch and sealed to complete a lithium ion polymer battery.

The organic electrolyte solution may include a lithium salt and a mixed organic solvent composed of a high dielectric constant solvent and a low boiling point solvent.

The high dielectric constant solvent is not particularly limited and may be any such solvent commonly used in the pertinent art. Nonlimiting examples of suitable high dielectric constant solvents include cyclic carbonates (e.g., ethylene carbonate, propylene carbonate, or butylene carbonate), gamma-butyrolactone, and the like.

The low boiling point solvent may also be selected from solvents commonly used in the pertinent art. Nonlimiting examples of suitable low boiling point solvents include chain carbonates (e.g., dimethyl carbonate, ethylmethyl carbonate, diethyl carbonate, or dipropyl carbonate), dimethoxyethane, diethoxyethane, fatty acid ester derivatives, and the like.

The high dielectric constant solvent and the low boiling point solvent may be mixed in a ratio ranging from about 1:1 to about 1:9 by volume. If the mixture ratio of the high dielectric constant solvent and the low boiling point solvent is outside this range, discharge capacity and charge/discharge cycle life may be reduced.

The lithium salt is not limited and may be any lithium salt commonly used in lithium batteries. Nonlimiting examples of suitable lithium salts include LiClO₄, LiCF₃SO₃, LiPF₆, LiN(CF₃SO₂)₂, LiBF₄, LiC(CF₃SO₂)₃, LiN(C₂F₅SO₂)₂ and mixtures thereof.

The concentration of the lithium salt in the organic electrolyte solution may range from about 0.5 to about 2 M. If the concentration of the lithium salt is less than about 0.5 M, the conductivity of the organic electrolyte solution may decrease, thereby lowering the performance of the organic electrolyte solution. On the other hand, if the concentration of the lithium salt exceeds about 2.0 M, the viscosity of the organic electrolyte solution may increase, thereby decreasing the mobility of lithium ions.

Hereinafter, the present invention will be described with reference to the following working examples. However, the examples are presented for illustrative purposes only and are not intended to limit the scope of the invention.

### Comparative Example 1

0.024 mol of lithium carbonate, 0.008 mol of nickel acetate, 0.0016 mol of cobalt acetate, and 0.0224 mol of manganese acetate were dissolved in 50 ml of a dilute nitric acid solution, and 50 ml of a citric acid solution and 30 ml of ethyleneglycol were added thereto to obtain a sol. The sol was stirred and heated on a 60°C hot plate for 12 hours or more to evaporate water. The resultant gel was ignited on a hot plate in the same manner as above to completely decompose the gel. Then, the decomposed gel was thermally treated at about 950°C in flowing air for about 5 hours and quenched on a stainless plate to yield the complex compound represented by Formula 2 in the form of a powder.

Formula 2 0.6Li[Li_{1/3}Mn_{2/3}]O₂-0.4LiNi_{0.5}Co_{0.1}Mn_{0.4}O₂

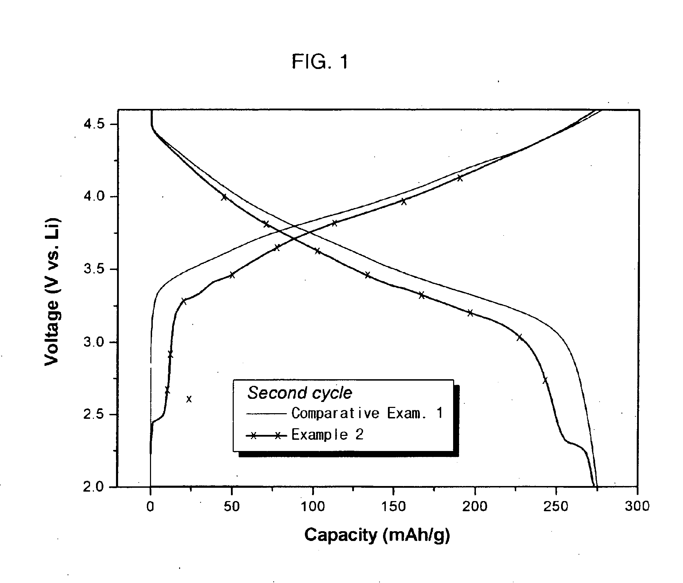

An active material of the complex compound powder was uniformly mixed with a conducting agent (Ketjen Black, EC-600JD), and a PVDF binder solution was added thereto to prepare a slurries having weight ratios of the active material to the conducting agent to the binder of 93:3:4. The slurries were coated on aluminum foil collectors having thicknesses of 15 µm and dried to obtain cathode plates. The cathode plates were further vacuum-dried to obtain coin cells (CR2016 type). Charge/discharge tests were performed using the coin cells. In the manufacture of the coin cells, metal lithium was used as the counter electrodes, and mixed solvents of ethylenecarbonate (EC) and diethylcarbonate (DEC) (3:7) including 1.3M LiPF₆ was used as the electrolytes. The cells were charged at a constant current of 20 mA/g until the cell voltages reached 4.6V, and then at a constant voltage of 4.6 V until the current was reduced to 2 mA/g. Then, the cells were discharged at a constant current of 20 mA/g until the cell voltages reached 2V. The charge/discharge test results are shown in FIGs. 1 through 3.

### Example 1

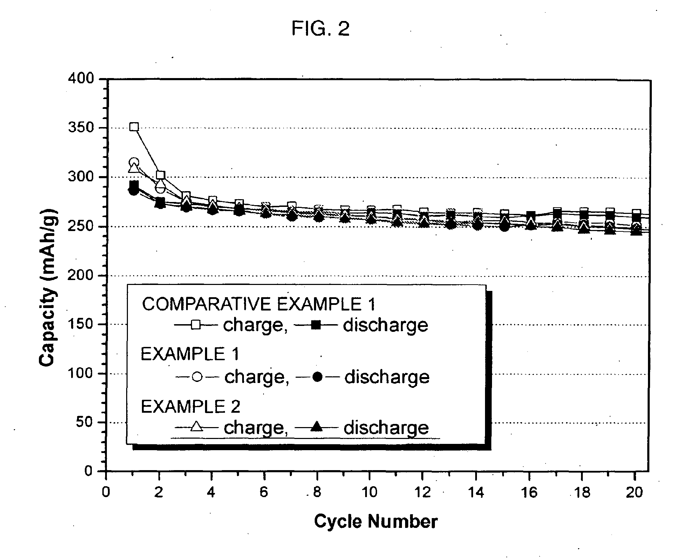

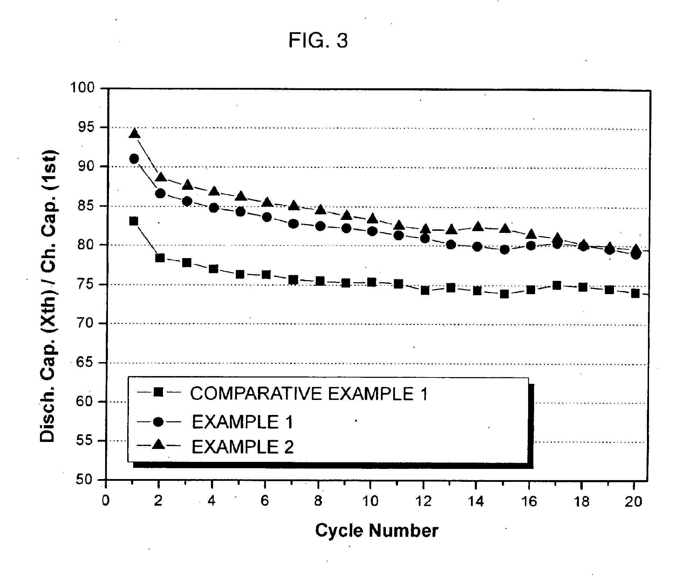

The complex compound (0.6Li[Li_{1/3}Mn_{2/3}]O₂-0.4LiNi_{0.5}Co_{0.1}Mn_{0.4}O₂) obtained in Comparative Example 1, vanadium oxide (VOₓ) nanowires, and a conducting agent (Ketjen Black) were uniformly mixed in a weight ratio of 83.7:9.3:3 to obtain a mixture. Then, a PVDF binder solution was added to the mixture to make slurries having weight ratios of the complex compound to the vanadium oxide to the conducting agent to the binder of 83.7:9.3:3:4. The manufacture of electrodes and coin cells and the charge/discharge tests were carried out as in Comparative Example 1. The charge/discharge test results are shown in FIGS. 2 and 3. FIG. 2 illustrates charge/discharge cycle characteristics, and FIG. 3 illustrates the retention ratio (%) of discharge capacity at an X^{th} cycle (X is the number of cycles) to the initial charge capacity.

### Example 2

The complex compound (0.6Li[Li_{1/3}Mn_{2/3}]O₂-0.4LiNi_{0.5}Co_{0.1}Mn_{0.4}O₂) obtained in Comparative Example 1, vanadium oxide (V₂O₅) powder, and a conducting agent (Ketjen Black) were uniformly mixed in a weight ratio of 83.7:9.3:3 to obtain a mixture. Then, a PVDF binder solution was added to the mixture to make slurries having weight ratios of the complex compound to the vanadium oxide to the conducting agent to the binder of 83.7:9.3:3:4. The manufacture of electrodes and coin cells and the charge/discharge tests were carried out as in Comparative Example 1. The charge/discharge test results are shown in FIGS. 1 through 3. FIG. 1 is a graph illustrating the initial charge/discharge characteristics when the content of V₂O₅ was 10 wt% based on the cathode active material. FIG. 2 illustrates charge/discharge cycle characteristics, and FIG. 3 illustrates the retention ratio (%) of discharge capacity at an X^{th} cycle (X is the number of cycles) to initial charge capacity.

Improved electrochemical characteristics of the cathode active materials according to the present invention can be understood from FIGS. 2 and 3. In particular, referring to FIG. 2, the discharge capacities of the cells prepared according to Examples 1 and 2 (including 10 wt% of vanadium oxide based on the weight of the cathode active material) were not significantly different from those of the cells of Comparative Example 1 (including no vanadium oxide). This shows that vanadium oxide is electrochemically active in a cathode. This result can also be seen in FIG. 1, which shows a potential plateau phase appearing in a low voltage region, which occurs due to the oxidation and reduction of vanadium ions. Furthermore, the ratio of discharge capacity to initial charge capacity of the cells prepared according to Examples 1 and 2 is significantly better than that of Comparative Example 1, as illustrated in FIG. 3.

The initial charge/discharge efficiency (91 %) of the cells prepared according to Example 1 (with a content of VOₓ nanowires of 10 wt% based on the weight of cathode active material) and the initial charge/discharge efficiency (94%) of the cells prepared according to Example 2 (with a content of V₂O₅ powder of 10 wt% based on the weight of the cathode active material) were significantly better than the initial charge/discharge efficiency (83%) of the cells prepared according to Comparative Example 1. At the second cycle, the charge/discharge efficiency of the cells prepared according to Example 2 was maintained at a high level of 89%, whereas the charge/discharge efficiency of the cells prepared according to Comparative Example 1 was reduced to 78%.

Cathode active materials according to the present invention are obtained by adding an electrochemically active transition metal oxide to a complex compound system. Therefore, reduction in initial irreversible capacity can be minimized, and oxygen generation (which may occur inside batteries) can be prevented, thereby improving battery safety. A cathode employing an inventive cathode active material can be advantageously used in a lithium battery having a counter electrode, thereby increasing utility of the cathode active material as a high capacity cathode material.

## Claims

1. A cathode active material comprising:
a lithium-free transition metal oxide; and
a lithium metal oxide represented by Formula 1:
xLi₂MO₃-(1-x)LiMeO₂ Formula 1
wherein:
0<x≤0.8,
M is selected from the group consisting of Mn, Ti, Zr and combinations thereof, and
Me is at least one metal selected from the group consisting of Ti, V, Cr, Mn, Fe, Co, Ni, Cu, Al, Mg, Zr, B and combinations thereof.

2. The cathode active material of claim 1, wherein the transition metal oxide is selected from the group consisting of vanadium-containing oxides, manganese-containing oxides, iron-containing oxides, titanium-containing oxides, cobalt-containing oxides, nickel-containing oxides, molybdenum-containing oxides, tungsten-containing oxides and combinations thereof.

3. The cathode active material of claim 2, wherein the transition metal oxide is selected from the group consisting of vanadium-containing oxides and manganese-containing oxides.

4. The cathode active material of claim 3, wherein the transition metal oxide is selected from the group consisting of V₂O₅ and oxides represented by VOₓ, wherein 2≤x<2.5.

5. The cathode active material of claim 1, wherein the transition metal oxide is present in an amount of about 50 wt% or less based on a total weight of the cathode active material.

6. The cathode active material of claim 5, wherein the transition metal oxide is present in an amount ranging from about 3 to about 20 wt% based on a total weight of the cathode active material.

7. The cathode active material of claim 1, wherein Me is a metal selected from the group consisting of Cr, Mn, Co, Ni and combinations thereof.

8. The cathode active material of claim 1, wherein x ranges from about 0.1 to about 0.6.

9. A cathode comprising the cathode active material of claim 1.

10. The cathode of claim 9, wherein the transition metal oxide comprises a lithium-free transition metal oxide.

11. The cathode of claim 9 or 10, wherein the transition metal oxide is selected from the group consisting of vanadium-containing oxides, manganese-containing oxides, iron-containing oxides, titanium-containing oxides, cobalt-containing oxides, nickel-containing oxides, molybdenum-containing oxides, tungsten-containing oxides and combinations thereof.

12. A lithium battery comprising:
the cathode of any of claims 9 to 11;
an anode; and
an organic electrolyte solution.

13. The lithium battery of claim 12, wherein the anode comprises an anode active material, a conducting agent, a binder, and a solvent.

14. The lithium battery of claim 13, wherein the anode active material is selected from the group consisting of lithium metal, lithium alloys, carbonaceous materials, and graphite.

15. The lithium battery of any of claims 12 to 14, further comprising a separator.

16. The lithium battery of any of claims 12 to 15, wherein the organic electrolyte solution comprises a lithium salt and a mixed solvent comprising a first solvent selected from the group consisting of ethylene carbonate, propylene carbonate, butylene carbonate, gamma-butyrolactone and combinations thereof and a second solvent selected from the group consisting of dimethyl carbonate, ethylmethyl carbonate, diethyl carbonate, dipropyl carbonate, dimethoxyethane, diethoxyethane, fatty acid ester derivatives, and combinations thereof.

17. The lithium battery of any of claims 12 to 16, wherein the transition metal oxide is selected from the group consisting of vanadium-containing oxides, manganese-containing oxides, iron-containing oxides, titanium-containing oxides, cobalt-containing oxides, nickel-containing oxides, molybdenum-containing oxides, tungsten-containing oxides and combinations thereof.

## Patentansprüche

1. Aktives Kathodenmaterial, umfassend:
ein Lithium-freies Übergangsmetalloxid und
ein Lithiummetalloxid, das durch Formel 1 dargestellt wird:
xLi₂MO₃-(1-x) LiMeO₂ Formel 1
worin:
0 < x ≤ 0,8,
M aus der Gruppe, bestehend aus Mn, Ti, Zr und Kombinationen davon, ausgewählt ist und
Me wenigstens ein Metall ist, das aus der Gruppe, bestehend aus Ti, V, Cr, Mn, Fe, Co, Ni, Cu, Al, Mg, Zr, B und Kombinationen davon, ausgewählt ist.

2. Aktives Kathodenmaterial gemäß Anspruch 1, wobei das Übergangsmetalloxid aus der Gruppe, bestehend aus Vanadium-enthaltenden Oxiden, Mangan-enthaltenden Oxiden, Eisen-enthaltenden Oxiden, Titan-enthaltenden Oxiden, Kobaltenthaltenden Oxiden, Nickel-enthaltenden Oxiden, Molybdänenthaltenden Oxiden, Wolfram-enthaltenden Oxiden und Kombinationen davon, ausgewählt ist.

3. Aktives Kathodenmaterial gemäß Anspruch 2, wobei das Übergangsmetalloxid aus der Gruppe, bestehend aus Vanadium-enthaltenden Oxiden und Mangan-enthaltenden Oxiden, ausgewählt ist.

4. Aktives Kathodenmaterial gemäß Anspruch 3, wobei das Übergangsmetalloxid aus der Gruppe, bestehend aus V₂O₅ und Oxiden, die durch VOₓ, worin 2 ≤ x < 2,5, dargestellt werden, ausgewählt ist.

5. Aktives Kathodenmaterial gemäß Anspruch 1, wobei das Übergangsmetalloxid in einer Menge von etwa 50 Gew. - % oder weniger, bezogen auf das Gesamtgewicht des aktiven Kathodenmaterials, vorliegt.

6. Aktives Kathodenmaterial gemäß Anspruch 5, wobei das Übergangsmetalloxid in einer Menge, die von etwa 3 bis etwa 20 Gew.-%, bezogen auf das Gesamtgewicht des aktiven Kathodenmaterials, reicht, vorliegt.

7. Aktives Kathodenmaterial gemäß Anspruch 1, wobei Me ein Metall, ausgewählt aus der Gruppe, bestehend aus Cr, Mn, Co, Ni und Kombinationen davon, ist.

8. Aktives Kathodenmaterial gemäß Anspruch 1, wobei x im Bereich von etwa 0,1 bis etwa 0,6 liegt.

9. Kathode, umfassend das aktive Kathodenmaterial gemäß Anspruch 1.

10. Kathode gemäß Anspruch 9, wobei das Übergangsmetalloxid ein Lithium-freies Übergangsmetalloxid umfasst.

11. Kathode gemäß Anspruch 9 oder 10, wobei das Übergangsmetalloxid aus der Gruppe, bestehend aus Vanadium-enthaltenden Oxiden, Mangan-enthaltenden Oxiden, Eisen-enthaltenden Oxiden, Titan-enthaltenden Oxiden, Kobaltenthaltenden Oxiden, Nickel-enthaltenden Oxiden, Molybdänenthaltenden Oxiden, Wolfram-enthaltenden Oxiden und Kombinationen davon, ausgewählt ist.

12. Lithiumbatterie, umfassend
die Kathode gemäß einem der Ansprüche 9 bis 11;
eine Anode und
eine organische Elektrolytlösung.

13. Lithiumbatterie gemäß Anspruch 12, wobei die Anode ein aktives Anodenmaterial, ein leitendes Mittel, ein Bindemittel und ein Lösungsmittel umfasst.

14. Lithiumbatterie gemäß Anspruch 13, wobei das aktive Anodenmaterial aus der Gruppe, bestehend aus Lithiummetall, Lithiumlegierungen, Kohlenstoff-haltigen Materialien und Graphit, ausgewählt ist.

15. Lithiumbatterie gemäß einem der Ansprüche 12 bis 14, die außerdem einen Separator umfasst.

16. Lithiumbatterie gemäß einem der Ansprüche 12 bis 15, wobei die organische Elektrolytlösung ein Lithiumsalz und ein gemischtes Lösungsmittel, das ein erstes Lösungsmittel, ausgewählt aus der Gruppe, bestehend aus Ethylencarbonat, Propylencarbonat, Butylencarbonat, gamma-Butyrolacton und Kombinationen davon, und ein zweites Lösungsmittel, ausgewählt aus der Gruppe, bestehend aus Dimethylcarbonat, Ethylmethylcarbonat, Diethylcarbonat, Dipropylcarboant, Dimethoxyethan, Diethoxyethan, Fettsäureesterderivaten und Kombinationen davor, umfasst.

17. Lithiumbatterie gemäß einem der Ansprüche 12 bis 16, wobei das Übergangsmetalloxid aus der Gruppe, bestehend aus Vanadium-enthaltenden Oxiden, Mangan-enthaltenden Oxiden, Eisen-enthaltenden Oxiden, Titan-enthaltenden Oxiden, Kobaltenthaltenden Oxiden, Nickel-enthaltenden Oxiden, Molybdänenthaltenden Oxiden, Wolfram-enthaltenden Oxiden und Kombinationen davon, ausgewählt ist.

## Revendications

1. Matériau actif de cathode comprenant :
un oxyde de métal de transition dépourvu de lithium ; et
un oxyde de métal de lithium représenté par la formule 1 :
xLi₂MO₃-(1-x)LiMeO₂ Formule 1
dans laquelle :
0 < x ≤ 0,8,
M est choisi dans le groupe constitué par Mn, Ti, Zr et leurs combinaisons, et
Me est au moins un métal choisi dans le groupe constitué par Ti, V, Cr, Mn, Fe, Co, Ni, Cu, Al, Mg, Zr, B et leurs combinaisons.

2. Matériau actif de cathode selon la revendication 1, dans lequel l'oxyde de métal de transition est choisi dans le groupe constitué par les oxydes contenant du vanadium, les oxydes contenant du manganèse, les oxydes contenant du fer, les oxydes contenant du titane, les oxydes contenant du cobalt, les oxydes contenant du nickel, les oxydes contenant du molybdène, les oxydes contenant du tungstène et leurs combinaisons.

3. Matériau actif de cathode selon la revendication 2, dans lequel l'oxyde de métal de transition est choisi dans le groupe constitué par les oxydes contenant du vanadium et les oxydes contenant du manganèse.

4. Matériau actif de cathode selon la revendication 3, dans lequel l'oxyde de métal de transition est choisi dans le groupe constitué par V₂O₅ et les oxydes représentés par VOₓ, où 2 ≤ x < 2,5.

5. Matériau actif de cathode selon la revendication 1, dans lequel l'oxyde de métal de transition est présent dans une quantité d'environ 50 % en poids ou moins par rapport à un poids total du matériau actif de cathode.

6. Matériau actif de cathode selon la revendication 5, dans lequel l'oxyde de métal de transition est présent dans une quantité variant d'environ 3 à environ 20 % en poids par rapport à un poids total du matériau actif de cathode.

7. Matériau actif de cathode selon la revendication 1, dans lequel Me est un métal choisi dans le groupe constitué par Cr, Mn, Co, Ni et leurs combinaisons.

8. Matériau actif de cathode selon la revendication 1, dans lequel x varie d'environ 0,1 à environ 0,6.

9. Cathode comprenant le matériau actif de cathode selon la revendication 1.

10. Cathode selon la revendication 9, dans laquelle l'oxyde de métal de transition comprend un oxyde de métal de transition dépourvu de lithium.

11. Cathode selon la revendication 9 ou 10, dans laquelle l'oxyde de métal de transition est choisi dans le groupe constitué par les oxydes contenant du vanadium, les oxydes contenant du manganèse, les oxydes contenant du fer, les oxydes contenant du titane, les oxydes contenant du cobalt, les oxydes contenant du nickel, les oxydes contenant du molybdène, les oxydes contenant du tungstène et leurs combinaisons.

12. Batterie au lithium comprenant :
la cathode selon l'une quelconque des revendications 9 à 11 ;
une anode ; et
une solution d'électrolyte organique.

13. Batterie au lithium selon la revendication 12, dans laquelle l'anode comprend un matériau actif d'anode, un agent conducteur, un liant et un solvant.

14. Batterie au lithium selon la revendication 13, dans laquelle le matériau actif d'anode est choisi dans le groupe constitué par le métal de lithium, les alliages de lithium, les matériaux carbonés et le graphite.

15. Batterie au lithium selon l'une quelconque des revendications 12 à 14, comprenant en outre un séparateur.

16. Batterie au lithium selon l'une quelconque des revendications 12 à 15, dans laquelle la solution d'électrolyte organique comprend un sel de lithium et un solvant mixte comprenant un premier solvant choisi dans le groupe constitué par le carbonate d'éthylène, le carbonate de propylène, le carbonate de butylène, la gamma-butyrolactone et leurs combinaisons et un second solvant choisi dans le groupe constitué par le carbonate de diméthyle, le carbone d'éthylméthyle, le carbonate de diéthyle, le carbonate de dipropyle, le diméthoxyéthane, le diéthoxyéthane, les dérivés d'ester d'acide gras et leurs combinaisons.

17. Batterie au lithium selon l'une quelconque des revendications 12 à 16, dans laquelle l'oxyde de métal de transition est choisi dans le groupe constitué par les oxydes contenant du vanadium, les oxydes contenant du manganèse, les oxydes contenant du fer, les oxydes contenant du titane, les oxydes contenant du cobalt, les oxydes contenant du nickel, les oxydes contenant du molybdène, les oxydes contenant du tungstène et leurs combinaisons.
